# EUROPEAN PATENT SPECIFICATION

(11) **EP 4 631 614 B1**
(45) Date of publication and mention of the grant of the patent: **22.07.2026**
(21) Application number: 25169086.3
(22) Date of filing: 08.04.2025
(51) Int. Cl.: B01J 19/12, C01B 3/04

(54) **HIGH TEMPERATURE LASER CENTRIFUGE**
HOCHTEMPERATUR-LASERZENTRIFUGE
CENTRIFUGEUSE LASER À HAUTE TEMPÉRATURE

(30) Priority: 08.04.2024 US 202418629197
(43) Date of publication of application: 15.10.2025
(73) Proprietor: RTX Corporation, Farmington, CT 06032 (US)
(72) Inventor: MITCHELL, James P., Farmington, 06032 (US)
(74) Representative: Dehns

(56) References cited:
- CN-B- 108 671 877
- US-A1- 2022 363 997
- US-A1- 2024 409 400

## Description

### BACKGROUND

Hydrogen is a potential "clean" energy carrier alternative to many other traditional energy sources. However, hydrogen is not available in abundance naturally and therefore must be isolated from other compounds, such as water. Isolation techniques and systems that systematically provide the final delta-G energy separation necessary include standard electrolysis, high temperature and high pressure electrolysis methods, systems using high-temperature, high pressure solid oxide membranes, thermochemical techniques, and photochemical techniques. However, these each require input energy and input heat, which provides opportunity for thermal energy loss and system efficiency reduction. Additionally, conventional isolation techniques are unfeasible for large-scale hydrogen production because of the extreme operating conditions, such as very high temperatures and/or pressures, chemical processes, electrical inputs and/or combinations thereof. In addition, some hydrogen isolation techniques are unsuitable for local or mobile hydrogen production because of large footprint, safety concerns, and/or practicality of building the required systems. US2022/363997 discloses an heated device with a process cavity.

### SUMMARY

A device according to an example of the present disclosure includes a rotatable centrifuge container that includes a process cavity, at least one inlet into the process cavity, and at least one outlet out of the process cavity. A thermal target is disposed in the process cavity, and a laser source is configured to emit a laser beam into the process cavity onto the thermal target. The laser beam heats the thermal target and the thermal target heats the process cavity.

In a further embodiment of any of the foregoing embodiments, the rotatable centrifuge container includes at least one optic window.

In a further embodiment of any of the foregoing embodiments, the at least one optic window is selected from the group consisting of sapphire, diamond, and combinations thereof.

In a further embodiment of any of the foregoing embodiments, the rotatable centrifuge container is cylindrical and has first and second axial end walls and a curved side wall that joins the first and second axial end walls. The at least one optical window located in the curved side wall.

In a further embodiment of any of the foregoing embodiments, the laser source is a pulsed laser that has a pulse frequency that corresponds to a rotational velocity of the rotatable centrifuge container such that when the pulsed laser is pulsed ON. The laser beam is received through the at least one optic window onto the thermal target.

In a further embodiment of any of the foregoing embodiments, the rotatable centrifuge container is made of tungsten.

In a further embodiment of any of the foregoing embodiments, the process cavity of the rotatable centrifuge container includes a carbide liner selected from the group consisting of tantalum hafnium carbide, hafnium carbonitride, and combinations thereof.

In a further embodiment of any of the foregoing embodiments, the laser source is configured to emit the laser beam to the thermal target through the at least one inlet, the at least one outlet, or both.

In a further embodiment of any of the foregoing embodiments, the thermal target is made of a ceramic.

In a further embodiment of any of the foregoing embodiments, the ceramic is selected from the group consisting of tantalum hafnium carbide, hafnium carbonitride, and combinations thereof.

In a further embodiment of any of the foregoing embodiments, the inlet includes a heat exchanger comprising a first tube and a second tube that circumscribes, and is concentric with, the first tube such that there is an annular passage between the first and second tubes.

In a further embodiment of any of the foregoing embodiments, the rotatable centrifuge container defines a central axis about which the rotatable centrifuge container is rotatable, the thermal target is rotationally symmetric about the central axis, and the first and second tubes are coaxial with the central axis.

In a further embodiment of any of the foregoing embodiments, the rotatable centrifuge container is cylindrical and has first and second axial end walls and a curved side wall joining the first and second axial end walls, the at least one outlet includes orifices in the curved side wall.

A further embodiment of any of the foregoing embodiments includes a reactor is fluidly connected with either the at least one inlet or the at least one outlet. The reactor is selected from an electrolyzer reactor or a Fischer-Tropsch reactor.

In a further embodiment of any of the foregoing embodiments, at least one of the centrifuge container or the thermal target includes vanes.

A method of splitting a compound into constituent atoms according to an example of the present disclosure includes providing the compound through at least one inlet into a process cavity of a rotatable centrifuge container that includes the process cavity, the at least one inlet, and at least one outlet out of the process cavity; heating a thermal target disposed in the process cavity using at least one laser, the thermal target heating the process cavity and causing the compound to split into the constituent atoms; separating the constituent atoms by mass by rotating the centrifuge container, and providing at least two outflow streams of the constituent atoms from the centrifuge container.

A further embodiment of any of the foregoing embodiments includes providing an inert gas into the process cavity, the inert gas being heavier, by atomic mass, than oxygen.

In a further embodiment of any of the foregoing embodiments, the at least one laser includes at least two laser beams of different wavelengths than each other.

In a further embodiment of any of the foregoing embodiments, establishing a continuous steady-state operation by pressure-regulating the compound provided through the at least one inlet and pressure-regulating the at least two outflow streams such that a pressure in the centrifuge container is maintained at a constant pressure.

In a further embodiment of any of the foregoing embodiments, the compound includes saline water.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. In this disclosure, like reference numerals designate like elements where appropriate and reference numerals with the addition of one-hundred or multiples thereof designate modified elements that are understood to incorporate the same features and benefits of the corresponding elements. The drawings that accompany the detailed description can be briefly described as follows.
Figure 1 illustrates a reactor device for splitting water.
Figure 2 illustrates a centrifuge container with optic windows on the side wall.
Figure 3 illustrates a centrifuge container with optic windows on the axial end walls.
Figure 4 illustrates a reactor device for splitting water.
Figure 5 illustrates a centrifuge container in which laser beams are provided through an inlet and an outlet.
Figure 6 illustrates a centrifuge container that has orifices in the side wall for

### DETAILED DESCRIPTION

Hydrogen and oxygen atoms in water begin to split from each other (known as "thermolysis" or "thermosplitting") at about 2000 °C (3632 °F). At about 2200 °C (3992 °F) and a pressure of 1 atmosphere, about 3% of the water atoms of a given quantity of water split, and at about 3000 °C (5432 °F), more than about 50% of the water atoms split. At temperatures of about 4000 °C (7232 °F), approximately 100% of the water atoms split. Such extreme temperatures, however, challenge the design of processing equipment, which may oxidize and/or corrode at such temperatures. Additionally, in order to be useful, the hydrogen that is produced must be physically isolated from unreacted water, oxygen, and other reaction products. As a result, thermolysis has not been commercially viable for large-scale hydrogen production.

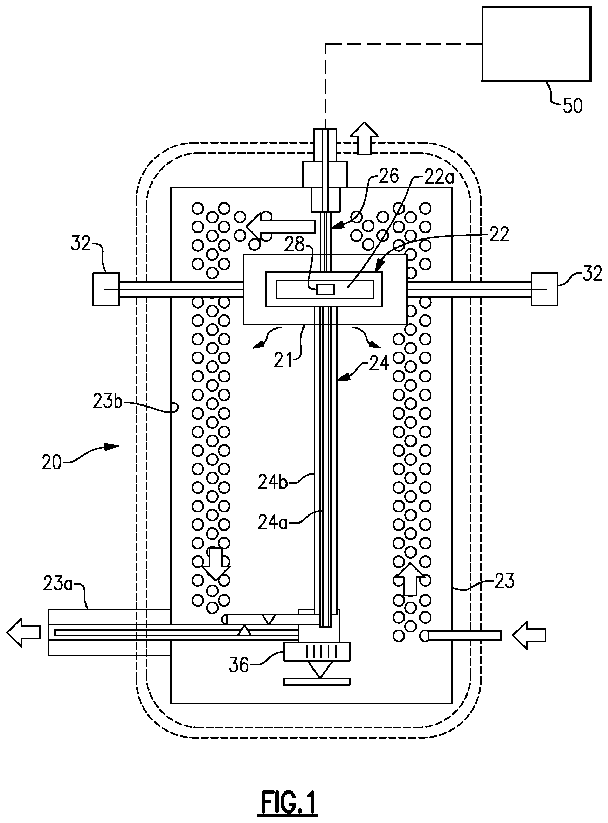

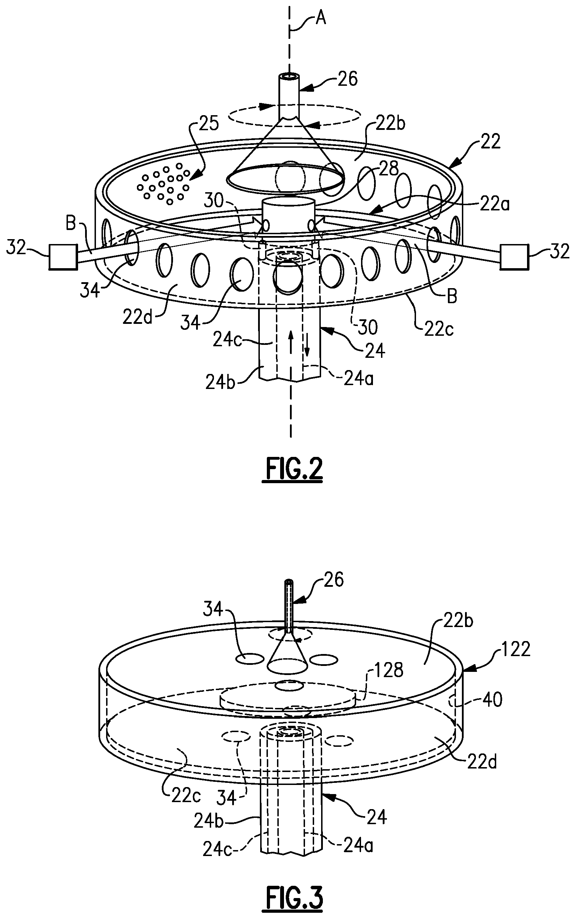

Accordingly, Figure 1 illustrates a device 20, which may also be referred to as a reactor, for splitting water and isolating hydrogen. It is to be appreciated that the device 20 can alternatively be used for processing other compounds in a similar manner as described herein. The device 20 includes a rotatable centrifuge container 22 including a process cavity 22a. The container 22 is located within a first vacuum chamber or region 21 and a second vacuum chamber 23, the interior of which is evacuated via port 23a and provided with an inert gas, such as argon, to facilitate reducing oxidation of the centrifuge container internal wall. The vacuum 21 facilitates limiting heat transfer and reducing drag during centrifuge rotation. Selected portions of the device 20, including the container 22, are also shown in Figure 2. The container 22 is cylindrical and includes first (top) and second (bottom) axial end walls 22b/22c and a curved side wall 22d that joins the end walls 22b/22c. The container 22 defines a central axis A and is designed to withstand high temperatures that are generated within the container 22 during operation of the device 20. In this regard, the container 22 is made of tungsten, such as pure tungsten or a tungsten alloy.

It is to be understood that the terms first, second, etc. are used herein to describe various elements, but these elements are not limited by these terms. These terms are only used to distinguish one element from another. For example, a first component could be termed a second components, and, similarly, a second component could be termed a first component, without departing from the scope of the various described embodiments. The first component and the second component are both component, but they are not the same component.

The device 20 includes at least one inlet 24 into the process cavity 22a and at least one outlet 26 out of the process cavity 22a. The inlet 24 is located at the axial end wall 22c and the outlet 26 is located opposite the inlet 24, at the axial end wall 22b. The inlet 24 serves as a gas port to provide reactant water (e.g., vapor), and the outlet 26 serves as a gas port for removal of hydrogen that is generated from the splitting of the water. The inlet 24 and the outlet 26 may be provided with gas regulators, valves, fittings, or other hardware for directing and controlling gas flow and pressure. In the illustrated example, the inlet 24 includes a first, inner tube 24a and a second, outer tube 24b that circumscribes, and is concentric with, the first tube 24a such that there is an annular passage 24c between the first and second tubes 24a/24. The tubes 24a/24b are coaxial with the central axis A. The inlet 24 thus as two passages, one through the first tube 24a and the other through the annular passage 24c. One of these two passages serves as a gas port inlet for providing reactant water into the container 22, and the other of the passages serves as a gas port outlet for oxygen from the container 22.

The tubes 24a/24b extend through the second axial end wall 22c of the container 22 into the process cavity 22a. The ends of the tubes 24a/24b are open to allow flow of water and oxygen from/to the cavity 22a. For instance, the tubes 24a/24b open in a direction that intersects a thermal target 28 that is disposed inside of the container 22 such that the water provided into the container 22 directly impinges upon the thermal target 28 at high temperature in the container 22.

The thermal target 28 disposed in the process cavity 22a near the ends of the tubes 24a/24b. For example, the thermal target 28 is mounted on one or more supports 30 that are attached at the ends of the tubes 24a/24b. Alternatively, the thermal target 28 is attached with the container 22 and rotates in unison with the container 22. The thermal target 28 is cylindrical and is rotationally symmetric about the central axis A. The thermal target 28 is made of an ultra-high temperature ceramic (UHTC), such as an UHTC carbide compound. The UHTC may be, but is not limited to, a compound of the tantalum hafnium carbide family that has the general formula TaₓHf_{y}C_{x+y}, for example Ta₄HfC₅, hafnium carbonitride (CHf₂N), or combinations thereof. A UHTC has a high melting point and can withstand extremely high temperatures without degrading, e.g., above 2,000 °C. The tubes 24b/24c may also be made of the UHTC, or a noble metal such as platinum rhodium, palladium, indium, osmium, ruthenium, gold, or combinations thereof.

The device 20 further includes one or more laser sources 32. Each such laser source 32 is configured to emit a laser beam B into the process cavity 22a onto the thermal target 28. The laser beam B heats the thermal target 28, and the thermal target 28 radiates heat that increases the temperature in the process cavity 22a. In one example, the inside of the vacuum chamber 23 is lined with a heat-reflective coating 23b (Figure 1). The container 22 radiates heat and the coating 23b serves to reflect at least a portion of the radiant heat back to the container 22. For example, the coating is formed of, but is not limited to, titanium dioxide, which has excellent reflection to about 500 to 550 nanometer wavelength radiation.

Additionally, the composition of the UHTC may be selected to adjust the melting temperature, oxidation resistance, laser energy absorption, or other properties of the thermal target 28, which may also increase durability of the thermal target 28. Although some radiative loss is likely, the composition may be selected to "tune" the target 28 for more optimal absorption of a given wavelength or wavelength band, enabling lower losses through the container 22 and greater opportunity for thermal transfer by conduction into the water and gas in the container 22. Moreover, in additional examples, the laser sources 32 provide laser beams of different wavelengths or wavelength bands from each other, each wavelength or wavelength band is selected to target a different absorption band of the thermal target 28. For instance, a given composition of the UHTC may exhibit a decrease in reflection (i.e., an increase in absorption) at one or more wavelengths. The laser beams B would then be selected to provide laser wavelengths at those wavelengths in order to increase absorption. In other words, the laser wavelength provided is matched to the absorption mechanism of the material electron cloud. As examples, a given composition demonstrates absorption peaks at wavelengths of 1.5, 3, 7 and 10 micrometers, and the laser beams B are thus selected to provide wavelengths of 1.5, 3, 7 and/or 10 micrometers.

With continued reference to Figure 2, the container 22 includes at least one optic window 34. In the illustrated example, the container 22 includes a plurality of optic windows 34 that are located in the curved side wall 22d of the container 22. For example, the optic windows 34 are made of sapphire, diamond, or a combinations thereof and are circular, oval, or elliptical in shape to permit the container 22 to maintain good strength under high rotational speeds. The windows 34 are substantially transparent to the laser beam B and thus permit the laser beam B to be received though the container 22 onto the thermal target 28. A "heavy" inert gas may also be provided with the water into the container 22. For example, a heavy inert gas is one that is atomically heavier than oxygen, such as argon, krypton, xenon, radon, or combinations and that is substantially unreactive with the container 22, hydrogen, oxygen, or water. When the container 22 is rotating, as the inert has is heavier than oxygen, the inert gas becomes pinned to the outer wall of the container 22, as indicated at 25, thereby blanketing the wall and windows 34 to protect the wall and windows 34 from contact with oxygen. Additionally, the above inert gases are also substantially transparent to the laser beams B, thus avoiding diffusion of the beams B so that substantially all of the laser energy is received onto the thermal target 28.

The optic windows 34 are discrete rather than being provided as a continuous window around the container 22. At the high rotational speeds of the container 22, the container 22 must maintain sufficient strength. The discrete windows 34 permit the regions between the windows 34 to act as struts that facilitate maintaining high strength.

In a further example, the optical windows 34 are uniformly spaced at regular intervals around the circumference of the container 22. Each laser source 32 is a pulsed laser that has a pulse frequency that corresponds to a rotational velocity of the container 22. For instance, the pulse frequency is timed to align the path of the laser beam B with the optical windows 34. Thus, the laser beam B is pulsed ON in timed coordination with alignment of the laser beam path with one of the optic windows 34 such that the laser beam B is received through the optic window 34 onto the thermal target 28. Conversely, the laser beam B is pulsed off in timed coordination with alignment of the laser beam path with the struts between the windows 34. The pulsed timing prevents the laser beam B from impinging the wall of the container 22, thereby avoiding directly heating the container 22 and helping to maintain the container 22 within the operating temperature of the tungsten.

The laser source 32 and a drive 36 (Figure 1) that is coupled to rotate the container 22, such as by a rotary union, may be operably connected with a controller that is configured to operate the drive 36 and the laser source 32 to coordinate the pulse frequency with the rotational velocity of the container 22. For example, the drive 36 is a motor and may be any electrical winding style digital, brushless, continuous, pneumatic, fluid-driven, fixed-speed motor, or variable speed motor, and may be controlled to adjust conditions within the container 22.

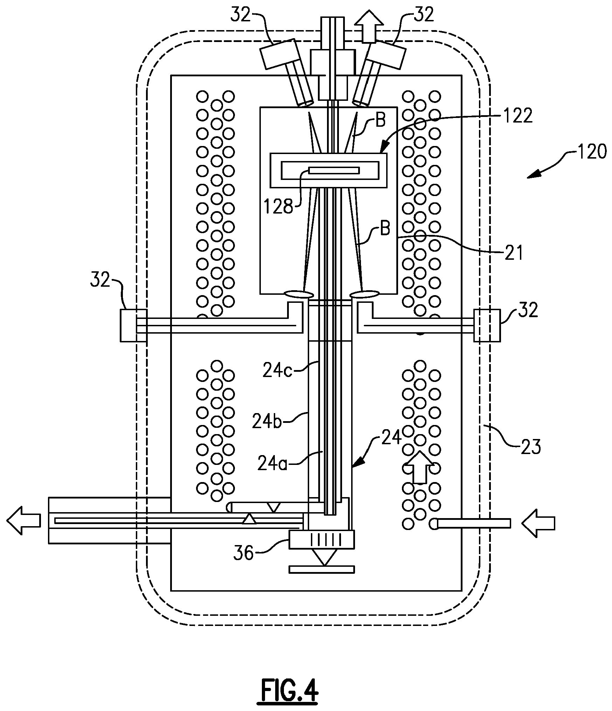

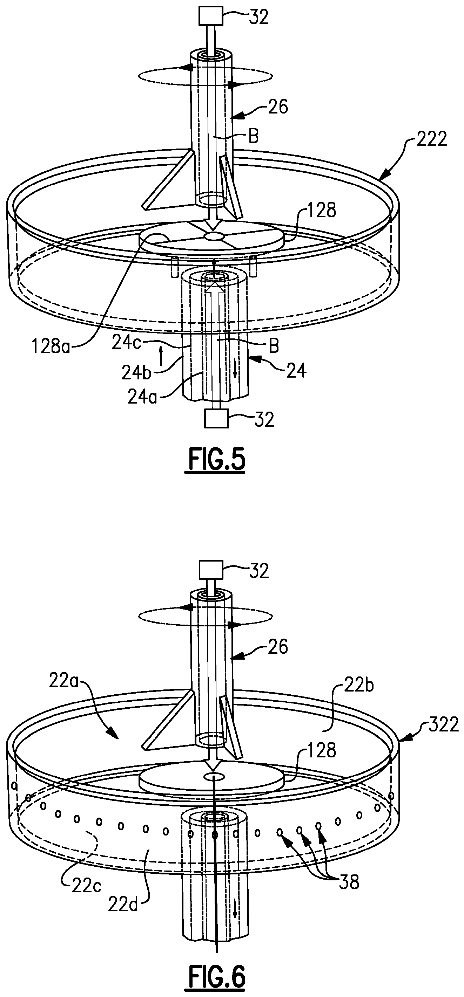

Figure 3 illustrates another example of a container 122 that is similar to the container 22 except that the optic windows 34 are located in the first and second axial end walls 22b/22c rather than the curved side wall 22d. Figure 4 illustrates the container 122 in device 120. In this example, the laser beams B are provided from above and below the container 122 in order to be received through the optic windows 34 onto the thermal target 128. In this example, the thermal target 128 is similar to the thermal target 28 in that it is also cylindrical, but the thermal target 128 is shorter in height and has a larger radius so as to be shaped as a disk. Such a shape provides additional axial end surface area for impingement of the laser beams B and heat radiation. As also shown in Figure 5, the thermal target 128 may also include one or more vanes 128a. For example, the vanes 128a are relatively narrow ridges that protrude from the target 128. The vanes 128a may additionally be attached with the container 122, or fully integrated with the container 122 and unattached with the thermal target 128. The vanes 128a facilitate rotational contact with the introduced and displaced elemental gas masses to facilitate heating and driving the gas centrifugally outward, which reduces processing time. Such vanes 128a may additionally or alternatively be provided in the inlet 24 to swirl the incoming water and inert gas.

Figure 5 illustrates another example container 222 that is the same as the containers 22 and 122 except that the container 222 does not have any optic windows 34. In this example, rather than provide the laser beams B through the optic windows 34, the laser sources 32 are configured to provide laser beams B to the thermal target 128 through the inlet 24, the outlet 26, or both. For instance, where even greater strength of the container 222 is desired, it may be desirable to avoid having the optic windows 34 and instead provide the laser beams B through the inlet 24 and/or outlet 26.

In operation, the drive 36 rotates the container 22/122/222 at very high speeds, such as speeds of at least about 20,000 rpm, or more particularly about 40,000 rpm. The laser source 32 provides laser beam B to the thermal target 28/128, which heats the process cavity 22a. Water is provided through the inlet 24 into the process cavity 22a. The water may be preheated, such as by a nuclear reactor or solar collector, to enhance efficiency in comparison to an electrolysis reactor. For example, the process cavity 22a is heated to a temperature of above about 3000 °C, such as a temperature of about 3500 °C or more. As the temperature of the material inside the container 22 approaches 4000 °C, the separation of water into its constituent hydrogen and oxygen atoms approaches 100% efficiency. At such rotational speeds the water in the container 22/122 (which may be about 0.5 meters in diameter) approaches the thermal velocity V_{TH} of water, which forces water to separate from hydrogen and other constituents in the container 22/122 and thus contributes to the isolation of hydrogen at the center of the container 22/122. The rotation of the container 22/122 causes heavier constituents, such as the oxygen, to move outwardly toward the curved side wall 22d of the container 22/122, while lighter constituents, such as hydrogen, are driven toward the center. The hydrogen collects in the radial center of the container 22/122 and flows out of the outlet 26. The oxygen collects in the volume around the hydrogen and flows through the annular passage 24c (or the passage in the first tube 24b depending on which is used for water delivery).

The constituent hydrogen and oxygen carry heat out of the container 22/122/222/322. Thus, although temperatures at and near the thermal target 28/128 may approach 4000 °C, the temperature at the walls of the container 22/122/22/322 are substantially less and are within the limits of the tungsten material used for the container 22/122/222/322. The thermal target 28/128 thus permits the high requisite temperatures to be achieved for water splitting, but without necessarily subjecting the walls of the container 22/122/222/322 to peak temperatures. Additionally, the concentric first and second tubes 24b/24c extend in the vacuum chamber 23 (see Figures 1 and 4). A portion of the heat radiated from the thermal target 28/128 is absorbed by the tubes 24b/24c. The concentric configuration serves as a heat exchanger to recapture heat and preheat the incoming water/gases, thus facilitating system efficiency.

In another example of the container 322 shown in Figure 6, the container 322 includes orifices 38 in the curved side wall 22d. The orifices 38 may be lined with metal tubes, such as noble metal microtubes of platinum rhodium, palladium, indium, osmium, ruthenium, or gold, to resist oxidation. The orifices 38 serve as additional oxygen outlets, such as for oxygen that is driven to the inside surface of the curved side wall 22d.

In further examples, any of the example containers 22/122/222/322 herein additionally include a liner 40 (Figure 3). For instance, the liner 40 is made of UHTC carbide, such as the tantalum hafnium carbide and/or hafnium carbonitride discussed above. The liner 40 may be a plating or coating on the interior surface of the container 22/122/222/322 and serves to protect the container 22/122/222/322 from oxidation.

The device 20/120 may be operated in a continuous, steady-state manner. For instance, the water input, laser power, and rotation speed are controlled in order to produce a continuous output of oxygen and hydrogen from a continuous input of water. In one example, steady-state operation is achieved when water enters the device 20/120 continuously at a pressure of 1 atmosphere and is maintained at that pressure by an electronic solenoid regulator to keep the contents in the container 22/122 at 1 atmosphere, with the lasers inputting 15 kilowatts of optical power into a 0.5 meter radius tungsten container rotating at 40,000 rpm. The hydrogen gas generated at center and top of the container 22/122 is maintained substantially pure on a continuous basis by allowing exhaust of unprocessed water and hydroxy. The exhaust back pressure is maintained to allow substantially only hydrogen at the output while maintaining a pressure of 1 atmosphere.

At 1 atmosphere pressure at 3726 °C, approximately 98% of water splits. Higher pressures are less efficient but more voluminous. At lower centrifuge speeds and temperatures there is splitting but the splitting is less efficient and thus requires longer times. Longer times generally contribute to lower thermal efficiency, as there is more opportunity for radiative losses that are not recaptured. Therefore, lower times for a faster splitting are generally better for overall efficiency, which may be expected to exceed 90% when combined with a reactor 50 (electrolyzer), as discussed below.

The regulator or regulators that are used may be steam pressure regulators, as are known in the art. The regulators may be modified, however, for temperatures above 800 °C, by fabrication from refractory compounds, such as the UHTC described herein, tungsten, tungsten alloys, or tungsten carbide, to withstand corrosion and oxidation that may otherwise occur from handling of input water that is preheated by a solar or nuclear reactor.

Additionally, the device 20/120 may be part of an efficient thermal-splitting thermolysis system (chemical or non-chemical) that includes a high temperature electrolysis system to break unprocessed water or maintain thermal heat advantage. Such a "hybrid" system could be a more optimal way to produce hydrogen and the present disclosure may be used as a pre-process to that system.

In further examples, the device 20/120 is used in combination with an additional reactor 50, as demonstrated in Figure 1. The reactor 50 is configured for a thermochemical cycle, such as a Fischer-Tropsch or e-fuel synthesis cycle, for producing long carbon chain fuel attaching hydrogen to long carbon chains. For instance, in a Fischer-Tropsch cycle, hydrogen produced from the device 20/120 is mixed with carbon dioxide to provide a syngas fuel for input into the reactor 50. The Fischer-Tropsch process converts the syngas fuel into hydrocarbons and byproducts, such as water and gas fractions. The water may be recirculated back in to the device 20/120 as a portion of the water input. In another example, the reactor 50 is an electrolyzer for hydrogen production. For example, the reactor 50 is instead connected to receive unreacted water and -OH, such as by connection to the one of the two passages of the inlet 24 that serves as an outlet for the unreacted water and -OH. The device 20/120 thus provides a feed of water and -OH into the electrolyzer, such as a solar electrolyzer, for high temperature electrolysis. Such an arrangement facilitates high efficiency conversion versus electrolysis alone, as the device 20/120 serves as a "preheater" for the water and hydroxy compound to boost electrolysis conversion.

The pulse frequency and laser energy inputs may also be regulated in connection to the input and output flow rates and/or pressures of any or all of the gases introduced or displaced. For example, the input energy is dependent on the efficiency of the water splitting conversion, radiation from the container 22/122, recapture of radiation, and mass and heat transport of incoming gases. A thermal gradient of the device 20/120 is dependent on the materials used by the heat exchanger input 24 (concentric tubes 24a/24b), centrifuge, heat exchanger size, and temperature of the incoming water. Higher temperature input enables higher efficiency, but can potentially slow recovery time to maintain the device 20/120 below desired temperatures to protect the device 20/120. As a result, pulse frequency may be modeled with the incoming heat and pressure levels of the water. Laser energy input may be suspended when cooling of components are required, however split efficiency is not substantially effected as the contents are coming in preheated therefore processing time will vary according to input temperatures. Incoming water that is at a temperature of 40 °C may require about 30 to 60 seconds to split in a centrifuge container that is about 2-3 centimeters in height and 0.5 meters in radius at 1 atmosphere pressure and 15 kW of laser energy input. Such conditions are expected to produce about 1 kg of hydrogen per 60 to 90 minutes if operated continuously with heat recovery.

In further examples, the device 20/120 is used to for thermosplitting of saline water, such as seawater (seawater has an average salinity of about 30 g/L or greater of dissolved salts). Electrolyzers that are based on ion-exchange membranes require substantially pure water input. The salts in saline water contaminate and clog the membrane, hindering or preventing operation. In contrast, the device 20/120 has no membrane and thus no such contamination or clogging issue. As a result, the device 20/120 can be operated using saline water as the water input. The centrifuge separates the salts, which may later be flushed or cleaned from the container 22/122. Moreover, the outlet 26 through which the hydrogen is drawn off may be a millimeter or more in diameter, which is substantially larger than the pores of an ion-exchange membrane. There is thus virtually no concern that the device 20/120 would become clogged as a membrane would. Thus, if used as above with the reactor 50 that is an electrolyzer, the device 20/120 enables use of a saline water input with an electrolyzer, as the device 20/120 can convert the saline water to purified water and hydroxy to be used as the input into the electrolyzer.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A device (20; 120) comprising:
a rotatable centrifuge container (22; 122; 222; 322) including a process cavity (22a), at least one inlet (24) into the process cavity (22a), and at least one outlet (26) out of the process cavity (22a);
a thermal target (28; 128) disposed in the process cavity (22a); and
a laser source (32) configured to emit a laser beam (B) into the process cavity (22a) onto the thermal target (28; 128), the laser beam (B) heating the thermal target (28; 128) and the thermal target (28; 128) heating the process cavity (22a).

2. The device (20; 120) as recited in claim 1, wherein the rotatable centrifuge container (22; 122; 222; 322) includes at least one optic window (34),
wherein, optionally, the at least one optic window (34) is selected from the group consisting of sapphire, diamond, and combinations thereof.

3. The device (20; 120) as recited in claim 2, wherein the rotatable centrifuge container (22; 122; 222; 322) is cylindrical and has first and second axial end walls (22b, 22c) and a curved side wall (22d) joining the first and second axial end walls (22b, 22c), the at least one optical window (34) located in the curved side wall (22d).

4. The device (20; 120) as recited in claim 2 or 3, wherein the laser source (32) is a pulsed laser that has a pulse frequency that corresponds to a rotational velocity of the rotatable centrifuge container (22; 122; 222; 322) such that when the pulsed laser is pulsed ON, the laser beam (B) is received through the at least one optic window (34) onto the thermal target (28; 128).

5. The device (20; 120) as recited in any preceding claim, wherein the rotatable centrifuge container (22; 122; 222; 322) is made of tungsten,
wherein, optionally, the process cavity (22a) of the rotatable centrifuge container (22; 122; 222; 322) includes a carbide liner (40) selected from the group consisting of tantalum hafnium carbide, hafnium carbonitride, and combinations thereof.

6. The device (20; 120) as recited in any preceding claim, wherein the laser source (32) is configured to emit the laser beam (B) to the thermal target (28; 128) through the at least one inlet (24), the at least one outlet (26), or both.

7. The device (20; 120) as recited in any preceding claim, wherein the thermal target (28; 128) is made of a ceramic,
wherein, optionally, the ceramic is selected from the group consisting of tantalum hafnium carbide, hafnium carbonitride, and combinations thereof.

8. The device (20; 120) as recited in any preceding claim, wherein the inlet (24) includes a heat exchanger comprising a first tube (24a) and a second tube (24b) that circumscribes, and is concentric with, the first tube (24a) such that there is an annular passage (24c) between the first and second tubes (24a, 24b),
wherein, optionally, the rotatable centrifuge container (22; 122; 222; 322) defines a central axis (A) about which the rotatable centrifuge container (22; 122; 222; 322) is rotatable, the thermal target (28; 128) is rotationally symmetric about the central axis (A), and the first and second tubes (24a, 24b) are coaxial with the central axis (A).

9. The device (20; 120) as recited in any preceding claim, wherein the rotatable centrifuge container (22; 122; 222; 322) is cylindrical and has first and second axial end walls (22b, 22c) and a curved side wall (22d) joining the first and second axial end walls (22b, 22c), the at least one outlet (26) includes orifices (38) in the curved side wall (22d).

10. The device (20; 120) as recited in any preceding claim, further comprising a reactor (50) fluidly connected with either the at least one inlet (24) or the at least one outlet (26), the reactor (50) selected from an electrolyzer reactor (50) or a Fischer-Tropsch reactor (50).

11. The device (20; 120) as recited in any preceding claim, wherein at least one of the centrifuge container (22; 122; 222; 322) or the thermal target (28; 128) includes vanes (128a).

12. A method of splitting a compound into constituent atoms, the method comprising:
providing the compound through at least one inlet (24) into a process cavity (22a) of a rotatable centrifuge container (22; 122; 222; 322) that includes the process cavity (22a), the at least one inlet (24), and at least one outlet (26) out of the process cavity (22a);
heating a thermal target (28; 128) disposed in the process cavity (22a) using at least one laser, the thermal target (28; 128) heating the process cavity (22a) and causing the compound to split into the constituent atoms;
separating the constituent atoms by mass by rotating the centrifuge container (22; 122; 222; 322), and providing at least two outflow streams of the constituent atoms from the centrifuge container (22; 122; 222; 322),
wherein, optionally, the compound includes saline water.

13. The method as recited in claim 12, further including providing an inert gas into the process cavity (22a), the inert gas being heavier, by atomic mass, than oxygen.

14. The method as recited in claim 12 or 13, wherein the at least one laser includes at least two laser beams (B) of different wavelengths than each other.

15. The method as recited in claim 12, 13 or 14, including establishing a continuous steady-state operation by pressure-regulating the compound provided through the at least one inlet (24) and pressure-regulating the at least two outflow streams such that a pressure in the centrifuge container (22; 122; 222; 322) is maintained at a constant pressure.

## Patentansprüche

1. Vorrichtung (20; 120), umfassend:
einen drehbaren Zentrifugenbehälter (22; 122; 222; 322), der einen Prozesshohlraum (22a), mindestens einen Einlass (24) in den Prozesshohlraum (22a) und mindestens einen Auslass (26) aus dem Prozesshohlraum (22a) einschließt;
ein thermisches Ziel (28; 128), das in dem Prozesshohlraum (22a) eingerichtet ist; und
eine Laserquelle (32), die dazu konfiguriert ist, einen Laserstrahl (B) in den Prozesshohlraum (22a) auf das thermische Ziel (28; 128) zu emittieren, wobei der Laserstrahl (B) das thermische Ziel (28; 128) erhitzt und das thermische Ziel (28; 128) den Prozesshohlraum (22a) erhitzt.

2. Vorrichtung (20; 120) nach Anspruch 1, wobei der drehbare Zentrifugenbehälter (22; 122; 222; 322) mindestens ein optisches Fenster (34) einschließt,
wobei optional das mindestens eine optische Fenster (34) aus der Gruppe ausgewählt ist, die aus Saphir, Diamant und Kombinationen davon besteht.

3. Vorrichtung (20; 120) nach Anspruch 2, wobei der drehbare Zentrifugenbehälter (22; 122; 222; 322) zylindrisch ist und eine erste und eine zweite axiale Endwand (22b, 22c) und eine gekrümmte Seitenwand (22d) aufweist, die die erste und die zweite axiale Endwand (22b, 22c) verbindet, wobei das mindestens eine optische Fenster (34) in der gekrümmten Seitenwand (22d) angeordnet ist.

4. Vorrichtung (20; 120) nach Anspruch 2 oder 3, wobei die Laserquelle (32) ein gepulster Laser ist, der eine Pulsfrequenz aufweist, die einer Rotationsgeschwindigkeit des drehbaren Zentrifugenbehälters (22; 122; 222; 322) entspricht, sodass, wenn der gepulste Laser EIN-gepulst wird, der Laserstrahl (B) durch das mindestens eine optische Fenster (34) auf das thermische Ziel (28; 128) empfangen wird.

5. Vorrichtung (20; 120) nach einem der vorhergehenden Ansprüche, wobei der drehbare Zentrifugenbehälter (22; 122; 222; 322) aus Wolfram besteht,
wobei optional der Prozesshohlraum (22a) des drehbaren Zentrifugenbehälters (22; 122; 222; 322) eine Karbidauskleidung (40) einschließt, die aus der Gruppe ausgewählt ist, die aus Tantalhafniumkarbid, Hafniumcarbonitrid und Kombinationen davon besteht.

6. Vorrichtung (20; 120) nach einem der vorhergehenden Ansprüche, wobei die Laserquelle (32) dazu konfiguriert ist, den Laserstrahl (B) durch den mindestens einen Einlass (24), den mindestens einen Auslass (26) oder beide auf das thermische Ziel (28; 128) zu emittieren.

7. Vorrichtung (20; 120) nach einem der vorhergehenden Ansprüche, wobei das thermische Ziel (28; 128) aus einer Keramik besteht,
wobei optional die Keramik aus der Gruppe ausgewählt ist, die aus Tantalhafniumkarbid, Hafniumcarbonitrid und Kombinationen davon besteht.

8. Vorrichtung (20; 120) nach einem der vorhergehenden Ansprüche, wobei der Einlass (24) einen Wärmetauscher einschließt, der ein erstes Rohr (24a) und ein zweites Rohr (24b) umfasst, das das erste Rohr (24a) umschreibt und mit diesem konzentrisch ist, sodass ein ringförmiger Durchgang (24c) zwischen dem ersten und dem zweiten Rohr (24a, 24b) vorhanden ist,
wobei optional der drehbare Zentrifugenbehälter (22; 122; 222; 322) eine Mittelachse (A) definiert, um die der drehbare Zentrifugenbehälter (22; 122; 222; 322) drehbar ist, das thermische Ziel (28; 128) rotationssymmetrisch um die Mittelachse (A) ist und das erste und das zweite Rohr (24a, 24b) koaxial zu der Mittelachse (A) sind.

9. Vorrichtung (20; 120) nach einem der vorhergehenden Ansprüche, wobei der drehbare Zentrifugenbehälter (22; 122; 222; 322) zylindrisch ist und eine erste und eine zweite axiale Endwand (22b, 22c) und eine gekrümmte Seitenwand (22d) aufweist, die die erste und die zweite axiale Endwand (22b, 22c) verbindet, wobei der mindestens eine Auslass (26) Öffnungen (38) in der gekrümmten Seitenwand (22d) einschließt.

10. Vorrichtung (20; 120) nach einem der vorhergehenden Ansprüche, ferner umfassend einen Reaktor (50), der entweder mit dem mindestens einen Einlass (24) oder dem mindestens einen Auslass (26) fluidisch verbunden ist, wobei der Reaktor (50) aus einem Elektrolyseur-Reaktor (50) oder einem Fischer-Tropsch-Reaktor (50) ausgewählt ist.

11. Vorrichtung (20; 120) nach einem der vorhergehenden Ansprüche, wobei mindestens eines von dem Zentrifugenbehälter (22; 122; 222; 322) oder dem thermischen Ziel (28; 128) Schaufeln (128a) einschließt.

12. Verfahren zum Spalten einer Verbindung in Bestandteilsatome, wobei das Verfahren umfasst:
Bereitstellen der Verbindung durch mindestens einen Einlass (24) in einen Prozesshohlraum (22a) eines drehbaren Zentrifugenbehälters (22; 122; 222; 322), der den Prozesshohlraum (22a), den mindestens einen Einlass (24) und mindestens einen Auslass (26) aus dem Prozesshohlraum (22a) einschließt;
Erhitzen eines thermischen Ziels (28; 128), das in dem Prozesshohlraum (22a) eingerichtet ist, unter Verwendung mindestens eines Lasers, wobei das thermische Ziel (28; 128) den Prozesshohlraum (22a) erhitzt und bewirkt, dass sich die Verbindung in die Bestandteilsatome spaltet;
Trennen der Bestandteilsatome nach Masse durch Drehen des Zentrifugenbehälters (22; 122; 222; 322) und Bereitstellen mindestens zweier Abflussströme der Bestandteilsatome aus dem Zentrifugenbehälter (22; 122; 222; 322),
wobei optional die Verbindung Salzwasser einschließt.

13. Verfahren nach Anspruch 12, ferner einschließend Bereitstellen eines Inertgases in den Prozesshohlraum (22a), wobei das Inertgas nach Atommasse schwerer als Sauerstoff ist.

14. Verfahren nach Anspruch 12 oder 13, wobei der mindestens eine Laser mindestens zwei Laserstrahlen (B) mit zueinander unterschiedlichen Wellenlängen einschließt.

15. Verfahren nach Anspruch 12, 13 oder 14, einschließend Herstellen eines kontinuierlichen stationären Betriebs durch Druckregulieren der durch den mindestens einen Einlass (24) bereitgestellten Verbindung und Druckregulieren der mindestens zwei Abflussströme, sodass ein Druck in dem Zentrifugenbehälter (22; 122; 222; 322) auf einem konstanten Druck gehalten wird.

## Revendications

1. Dispositif (20 ; 120) comprenant :
un récipient de centrifugeuse (22 ; 122 ; 222 ; 322) rotatif comportant une cavité de traitement (22a), au moins une entrée (24) dans la cavité de traitement (22a), et au moins une sortie (26) hors de la cavité de traitement (22a) ;
une cible thermique (28 ; 128) disposée dans la cavité de traitement (22a) ; et
une source laser (32) configurée pour émettre un faisceau laser (B) dans la cavité de traitement (22a) sur la cible thermique (28 ; 128), le faisceau laser (B) chauffant la cible thermique (28 ; 128) et la cible thermique (28 ; 128) chauffant la cavité de traitement (22a).

2. Dispositif (20 ; 120) selon la revendication 1, dans lequel le récipient de centrifugeuse (22 ; 122 ; 222 ; 322) rotatif comporte au moins une fenêtre optique (34),
dans lequel, optionnellement, l'au moins une fenêtre optique (34) est sélectionnée dans le groupe constitué de saphir, de diamant, et de combinaisons de ceux-ci.

3. Dispositif (20 ; 120) selon la revendication 2, dans lequel le récipient de centrifugeuse (22 ; 122 ; 222 ; 322) rotatif est cylindrique et présente des première et seconde parois d'extrémité axiales (22b, 22c) et une paroi latérale incurvée (22d) reliant les première et seconde parois d'extrémité axiales (22b, 22c), l'au moins une fenêtre optique (34) étant située dans la paroi latérale incurvée (22d).

4. Dispositif (20 ; 120) selon la revendication 2 ou 3, dans lequel la source laser (32) est un laser à impulsions qui présente une fréquence d'impulsion qui correspond à une vitesse de rotation du récipient de centrifugeuse (22 ; 122 ; 222 ; 322) rotatif de sorte que, lorsque le laser à impulsions est activé par impulsions, le faisceau laser (B) soit reçu à travers l'au moins une fenêtre optique (34) sur la cible thermique (28 ; 128).

5. Dispositif (20 ; 120) selon l'une quelconque revendication précédente, dans lequel le récipient de centrifugeuse (22 ; 122 ; 222 ; 322) rotatif est fait de tungstène,
dans lequel, optionnellement, la cavité de traitement (22a) du récipient de centrifugeuse (22 ; 122 ; 222 ; 322) rotatif comporte un revêtement en carbure (40) sélectionné dans le groupe constitué de carbure de tantale-hafnium, de carbonitrure d'hafnium, et de combinaisons de ceux-ci.

6. Dispositif (20 ; 120) selon l'une quelconque revendication précédente, dans lequel la source laser (32) est configurée pour émettre le faisceau laser (B) vers la cible thermique (28 ; 128) à travers l'au moins une entrée (24), l'au moins une sortie (26), ou les deux.

7. Dispositif (20 ; 120) selon l'une quelconque revendication précédente, dans lequel la cible thermique (28 ; 128) est faite de céramique,
dans lequel, optionnellement, la céramique est sélectionnée dans le groupe constitué de carbure de tantale-hafnium, de carbonitrure d'hafnium, et de combinaisons de ceux-ci.

8. Dispositif (20 ; 120) selon l'une quelconque revendication précédente, dans lequel l'entrée (24) comporte un échangeur de chaleur comprenant un premier tube (24a) et un second tube (24b) qui entoure et est concentrique avec le premier tube (24a) de sorte qu'il existe un passage annulaire (24c) entre les premier et second tubes (24a, 24b),
dans lequel, optionnellement, le récipient de centrifugeuse (22 ; 122 ; 222 ; 322) rotatif définit un axe central (A) autour duquel le récipient de centrifugeuse (22 ; 122 ; 222 ; 322) rotatif est rotatif, la cible thermique (28 ; 128) est symétrique en rotation autour de l'axe central (A), et les premier et second tubes (24a, 24b) sont coaxiaux avec l'axe central (A).

9. Dispositif (20 ; 120) selon l'une quelconque revendication précédente, dans lequel le récipient de centrifugeuse (22 ; 122 ; 222 ; 322) rotatif est cylindrique et présente des première et seconde parois d'extrémité axiales (22b, 22c) et une paroi latérale incurvée (22d) reliant les première et seconde parois d'extrémité axiales (22b, 22c), l'au moins une sortie (26) comporte des orifices (38) dans la paroi latérale incurvée (22d).

10. Dispositif (20 ; 120) selon l'une quelconque revendication précédente, comprenant en outre un réacteur (50) relié fluidiquement soit à l'au moins une entrée (24), soit à l'au moins une sortie (26), le réacteur (50) étant sélectionné d'un réacteur électrolyseur (50) ou d'un réacteur Fischer-Tropsch (50).

11. Dispositif (20 ; 120) selon l'une quelconque revendication précédente, dans lequel au moins l'un du récipient de centrifugeuse (22 ; 122 ; 222 ; 322) ou de la cible thermique (28 ; 128) comporte des ailettes (128a).

12. Procédé de division d'un composé en atomes constitutifs, le procédé comprenant :
la fourniture du composé à travers l'au moins une entrée (24) dans une cavité de traitement (22a) d'un récipient de centrifugeuse (22 ; 122 ; 222 ; 322) rotatif qui comporte la cavité de traitement (22a), l'au moins une entrée (24), et au moins une sortie (26) hors de la cavité de traitement (22a) ;
le chauffage d'une cible thermique (28 ; 128) disposée dans la cavité de traitement (22a) à l'aide d'au moins un laser, la cible thermique (28 ; 128) chauffant la cavité de traitement (22a) et amenant le composé à se diviser en atomes constitutifs ;
la séparation des atomes constitutifs par masse en rotation du récipient de centrifugeuse (22 ; 122 ; 222 ; 322), et la fourniture d'au moins deux flux de sortie des atomes constitutifs à partir du récipient de centrifugeuse (22 ; 122 ; 222 ; 322),
dans lequel, optionnellement, le composé comporte de l'eau saline.

13. Procédé selon la revendication 12, comportant en outre la fourniture d'un gaz inerte dans la cavité de traitement (22a), le gaz inerte étant plus lourd, en masse atomique, que de l'oxygène.

14. Procédé selon la revendication 12 ou 13, dans lequel l'au moins un laser comporte au moins deux faisceaux laser (B) de longueurs d'onde différentes l'un de l'autre.

15. Procédé selon la revendication 12, 13 ou 14, comportant l'établissement d'un fonctionnement continu en état stationnaire par régulation de la pression du composé fourni à travers l'au moins une entrée (24) et par régulation de la pression des au moins deux flux de sortie de sorte qu'une pression dans le récipient de centrifugeuse (22 ; 122 ; 222 ; 322) soit maintenue à une pression constante.
